# EUROPÄISCHE PATENTANMELDUNG

(11) **EP 0 898 288 A1**
(43) Veröffentlichungstag der Anmeldung: **24.02.1999**
(21) Anmeldenummer: 98108950.1
(22) Anmeldetag: 16.05.1998
(51) Int. Cl.: H01F 7/02, H02K 15/03

(54) **Magnetisches System, aufweisend einen oder mehrere an einem Trägerkörper befestigte Permanentmagnete**

(30) Priorität: 21.08.1997 DE 19736295
(71) Anmelder: Firma Carl Freudenberg, 69469 Weinheim (DE)
(72) Erfinder: Eckel, Hans-Gerd, Dr., 69514 Laudenbach (DE)

(57) **Zusammenfassung**

Magnetisches System, aufweisend einen oder mehrere an einem Trägerkörper befestigte Permanentmagnete, wobei der oder die Magnete auf der dem Trägerkörper (1) zugewandten Seite eine Innenfläche und der Trägerkörper auf der dem oder den Magneten zugewandten Seite eine entsprechende Außenfläche aufweisen, wobei die Außenfläche des Trägerkörpers bzw. die Innenfläche der Magnete zumindest abschnittsweise einen abgewinkelten verlaufenden Bereich aufweisen und wobei der oder die Magnete mit einem unter Vorspannung stehenden Spannelement an dem Trägerkörper befestigt sind.

## Beschreibung

### Technisches Gebiet

Ein magnetisches System, aufweisend einen oder mehrere an einem Trägerkörper befestigte Permanentmagnete dient zur Gestaltung eines magnetischen Kreises, wobei der Trägerkörper als Rückschlußkern dient. Dabei kann es sich um dipolare oder um monopolare Anordnungen handeln. Erstere werden für elektrische Maschinen, Hafträder, Schneidewalzen und anderes eingesetzt, letztere für Ringspaltsysteme.

### Stand der Technik

Permanentmagnete werden nach dem Stand der Technik im wesentlichen durch Kleben auf dem Trägerkörper befestigt. In vielen Fällen reicht jedoch diese Befestigungsart aufgrund hoher thermischer Belastungen, etwa große Temperaturwechselspiele oder hohe Maximaltemperatur, oder mechanischer Belastungen, etwa Fliehkräfte, Schwingbeschleunigungen, Stöße, nicht aus und es müssen zusätzliche Maßnahmen ergriffen werden. Zu diesen Maßnahmen zählen form- und kraftschlüssige Verbindungen, wie Klammern, Bandagen oder Schutzrohre.

Der Aufwand zur Herstellung bei der Montage ist mehr oder weniger hoch und kostenintensiv.

### Darstellung der Erfindung

Gemäß der Erfindung weisen die Außenfläche des Trägerkörpers bzw. die Innenfläche der Magnete zumindest abschnittsweise einen abgewinkelten Bereich auf, und sind der oder die Magnete mit einem unter Vorspannung stehenden Spannelement an dem Trägerkörper befestigt.

Dank der Erfindung wird ein dauerhafter Sitz der Permanentmagnete auf dem den magnetischen Rückfluß darstellenden Trägerkörper erzielt, der auch den Temperaturwechselbeanspruchungen, beispielsweise von - 40 bis 120°C über zehn Jahre, gerecht wird. Im Gegensatz zu der bisher üblichen Technik werden die Permanentmagnete über einen Kegelsitz am Trägerkörper durch das unter Vorspannung stehende Spannelement gehalten.

In einer Weiterbildung sind die dem Magneten zugewandten Flächen des Trägerkörpers und die dem Trägerkörper zugewandten Flächen der Magnete Teil eines Konus mit zumindest teilweise gekrümmter Außenfläche, so daß nur in der endgültigen Lage der oder die Magnete vollflächiger an dem Trägerkörper anliegen. Die rotationssymmetrische Fügefläche kann auf einfache Weise hergestellt werden.

Eine andere Weiterbildung zeichnet sich dadurch aus, daß der Querschnitt des Trägerkörpers mehreckig ist und daß die einander entsprechenden Flächen des Trägerkörpers und der Permanentmagnete mindestens eine Ecke aufweisen. Der Nachteil einer rotationssymmetrischen konischen Fläche mit nur genau einer Position idealen Sitzes ist ausgeräumt, da die Permanentmagnete längs der Kante stets eine vollflächige Anlage haben.

Vorteilhafterweise kann das Spannelement ein Spannband, eine Hülse oder ein Topf sein.

Um den Festsitz zu erhöhen, können an den sich einander entsprechenden Flächen der Magnete und/oder des Trägerkörpers Bereiche erhöhter Rauheit vorgesehen werden. Die Reibfaktor erhöhenden Maßnahmen können durch Drehen, Sandstrahlen, Rändeln bzw. Einlagern von abrasieren Pulvern mit Korngrößen kleiner 100 µm bewirkt werden.

Insbesondere magnetische Systeme mit zwei oder mehr über den Umfang des Tragerkörpers verteilt angeordneten Magneten sind durch die erfindungsgemäßen Maßnahmen besonders günstig herzustellen.

Der Festsitz wird dadurch erzielt, daß das Spannelement in gedehntem Zustand um den Umfang des mit Permanentmagneten bestückten Trägerkörpers angeordnet ist, wobei die Dehnung des Spannelements beim Verschieben des die Permanentmagnete auf ihren äußeren Umfang umfassenden Spannelements zusammen mit den Permanentmagneten entlang des Trägerkörpers erfolgt. Das Verschieben auf zur Schieberichtung winkeligen Flächen führt zu einer Aufweitung des Spannelements und setzt dieses unter Vorspannung. Der Vorteil einer plastischen Verformung des Spannelements besteht darin, daß eine definierte Vorspannung aufgebracht wird, die von den Toleranzen der einzelnen Bauteile unabhängig ist. Durch die plastische Verformung wird der elastische Anteil kaum beeinflußt und die plastische Verformung ist auch optisch wahrnehmbar. Somit ist sichergestellt, daß die erforderliche Vorspannkraft aufgebracht wurde.

Je nach Einsatzzweck können die Magnete unter dem Spannelement die gleiche. Polung oder eine unterschiedliche Polung auf der Stirnseite aufweisen.

Weiterhin ist es möglich, daß auf einem Trägerkörper, geteilt oder ungeteilt, mindestens zwei magnetische Systeme montiert sind.

Für bestimmte Anwendungen ist eine zylindrische Form der Außenkontur der Magnete vorteilhaft. Grundsätzlich ist es aber auch möglich, die Außenkontur der Magnete schräg zu gestalten.

Vorteilhafterweise weist die abgewinkelte Fläche einen Winkel zwischen 0,5 und 5° auf. Dieser Konuswinkel richtet sich nach den zu überdeckenden Fertigungstoleranzen der Magnetdicke sowie der Toleranzkette Hülseninnendurchmesser - Trägerkörperdurchmesser - Magnetdicke und den Festigkeitsparametern des Hülsenmaterials. Einen weiteren Einfluß haben auch die Magnetlänge und die zulässigen axialen Unsymmetrien, hervorgerufen durch die Magnethöhendifferenz. Ziel ist es, den Winkel so klein wie möglich zu halten.

Zur Gewährleistung höchster magnetischer Flüsse bei gleichzeitig einfacher Herstellungsmöglichkeit, z.B. bei Ringspaltsystemen, hat der Einzelmagnet keine rechteckige Form, bezogen auf die Länge und Breite, sondern er wird zur Erhöhung des Magnetvolumens trapezförmig ausgeführt. Die Stirnseite des Magneten mit der größten Dicke und mit dem kleinsten Radius auf der Unterseite bildet die schmale Seite des Trapezes. Durch die hinterschneidungsfreien Seiten des Permanentmagnets können die Magnete endabmessungsgenau in Formen gepreßt oder gespritzt werden. Dabei können Hochenergiemagnete auf Basis von NdFeB mittels Heißpreß- und Warmfließpreßverfahren mit magnetischen Kennwerten Bᵣ größer = 1,25 T hergestellt werden.

### Kurzbeschreibung der Zeichnungen

Ein magnetisches System gemäß der Erfindung ist in der Zeichnung dargestellt. Es zeigen die :
- Fig. 1: einen Schnitt durch das magnetische System mit übertrieben dargestelltem Konuswinkel, die
- Fig. 2: eine Ansicht von unten auf einen in Fig. 1 gezeigten Permanentmagneten des magnetischen Systems mit rotationssymmetrischer Innenfläche, die
- Fig. 3: eine Innenansicht auf den Permanentmagneten aus Fig. 2, die
- Fig. 4: einen Schnitt durch den in Fig. 2 dargestellten Permanentmagneten, die
- Fig. 5: eine perspektivische Darstellung eines magnetischen Systems nach den Fig. 1 bis 4, die
- Fig. 6: einen Permanentmagneten mit einer Kante auf der Innenfläche, die
- Fig. 7: eine perspektivische Darstellung eines magnetischen Systems nach Fig. 6, die
- Fig. 8: eine Innenansicht auf den Permanentmagneten aus Fig. 6, die
- Fig. 9: einen Schnitt durch den in Fig. 6 dargestellten Permanentmagneten, die
- Fig. 10: eine perspektivische Darstellung hierzu und die
- Fig. 11 bis 13: verschiedene Ausgestaltungen des Spaltes zwischen zwei benachbarten Permanentmagneten am Trägerkörper.

### Ausführungsbeispiel der Erfindung

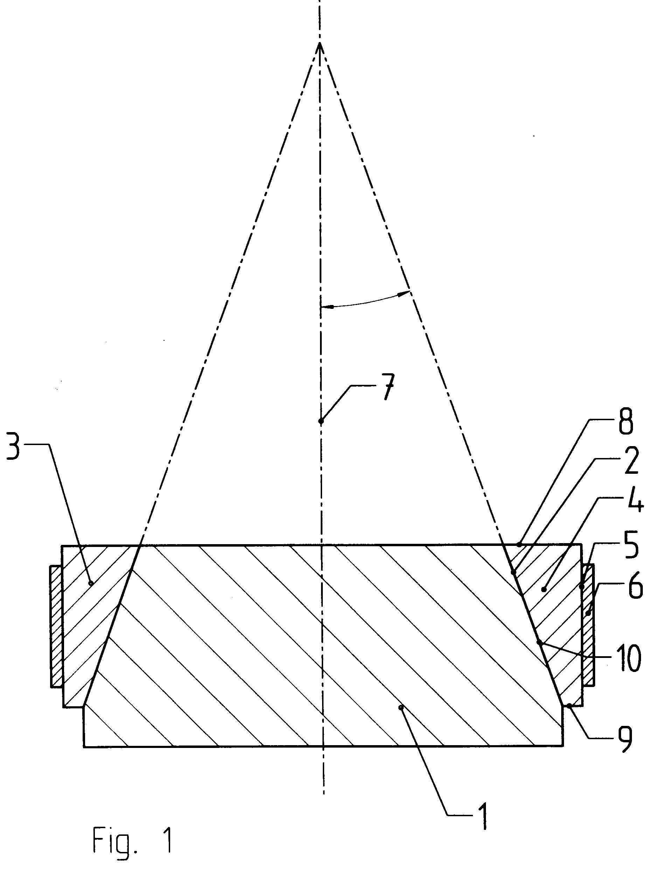

Das in Fig. 1 dargestellte magnetische System besteht aus einem Trägerkörper 1, an dessen Außenfläche 2 Permanentmagnete 3, 4 angebracht sind. Die Permanentmagnete 3, 4 sind auf ihrer Außenfläche 5 von einem eng anliegenden Spannband 6 umgeben.

Dieses Spannband 6 hat die Form einer Hülse und besteht aus einem Werkstoff wie Edelstahl (magnetisch oder austenitisch), Messing, Federbronze u.ä. oder Kohlefaser, Glasfaser oder anderen gewickelten monolithischen oder heterogenen Verbunden.

Die Außenfläche 2 des Trägerkörpers 1 weist bezüglich einer Mittelachse 7 einen Kegelwinkel α auf. Dieser Kegelwinkel α richtet sich nach den zu überdeckenden Fertigungstoleranzen der Magnetdicke sowie der Toleranzkette Hülseninnendurchmesser - Trägerkörperdurchmesser - Magnetdicke und den Festigkeitsparametern des Hülsenmaterials. Einen weiteren Einfluß haben auch die Magnetlänge und die zulässigen axialen magnetischen Asymmetrien, hervorgerufen durch die Magnethöhendifferenz. Ziel ist es, den Winkel so klein wie möglich zu halten. Im allgemeinen wird der Winkel zwischen 0,5° bis 5° liegen. Er kann aber auch aufgrund seiner Abmessungen, Toleranzen und Randbedingungen bis zum Verhältnis 4 größer oder kleiner sein.

Der Permanentmagnet 4 weist zwei Stirnflächen 8, 9 auf, welche aufgrund des konischen Verlaufs der Innenfläche 10 eine unterschiedliche radiale Länge haben.

Zur Montage werden die Magnete in der entsprechenden Hülse 6 mit oder ohne Beilagen zur Sicherung gleicher Abstände eingelegt. Dann wird der Trägerkörper 1 mit seinem Kegelsitz eingeführt, wodurch sich seine Außenfläche 2 auf der Innenfläche 10 der Magnete 3, 4 entlang verschiebt. Nach einer gewissen Wegstrecke muß der Trägerkörper 1 mit Kraft eingepreßt werden, wodurch sich die Hülse 6 aufweitet und die notwendige Vorspannung erzeugt. Die Vorspannkraft wird also durch Dehnen der Hülse 6 während des Verschiebens auf der zur Schieberichtung winkeligen Fläche erzeugt.

Der Außenradius der Magnete 3, 4 ist konstant, so daß sich eine zylindrische Form ergibt. Der feste Sitz des Magneten 3, 4 am Trägerkörper 1 wird dadurch erzielt, daß in der Endlage die Innenfläche 10 der Magnete 3, 4 mit der Außenfläche 2 des Trägerkörpers 1 so übereinstimmt, daß eine flächige Auflage erzielt wird. Unter idealen Bedingungen wird dies nach einer genau bestimmten Wegstrecke erreicht, wobei zunächst ein linienförmige Auflage des Magneten 3, 4 an dem Trägerkörper 1 vorliegt und es erst in der Endlage zur vollflächigen Auflage kommt.

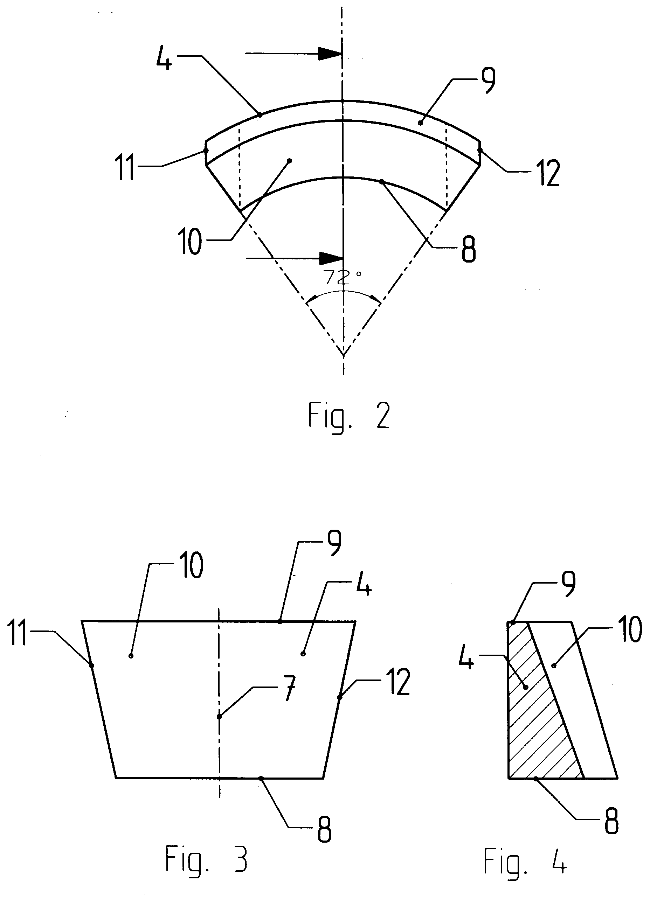

In Fig. 2 ist der Permanentmagnet 4 mit Blick auf seine Stirnfläche 9 dargestellt. Die Stirnfläche 9 ist durch die konisch verlaufende Innenfläche 10 mit der Stirnfläche 8 verbunden, von der nur eine innere Kante sichtbar ist. Die Seitenflächen 11, 12 verjüngen sich von der Stirnfläche 9 ausgehend zur Stirnfläche 8 hin, wobei sie auf jeder Höhe der Mittelachse 7 zueinander parallel verlaufen. Hierdurch ist eine einfache Herstellung mittels Schmieden möglich, da das Werkstück einfach aus dem Schmiedewerkzeug entnommen werden kann.

Wegen der parallelen Ausrichtung der Seitenflächen 11, 12, entlang der Achse 7, sind die Seitenflächen 11, 12 in dieser Darstellung nur durch die Kanten sichtbar. Der Magnet 3 ist trapezförmig ausgeführt, wobei die Stirnseite 8 des Magneten mit der größten Dicke und somit dem kleinsten Radius die schmale Seite des Trapezes bildet. Dies wird aus Fig. 3 ersichtlich.

Ein Blick auf die gekrümmte Innenfläche 10 des Permanentmagneten ist in Fig. 3 dargestellt. Man erkennt die Stirnseiten 8, 9 und die sich von der Stirnseite 8 zur Stirnseite 9 hin mit zunehmendem Abstand erstreckenden Seitenflächen 11, 12. Insgesamt ergibt sich aus den sichtbaren Kanten der Stirnflächen 8, 9 und Seitenflächen 11, 12 eine Trapezform.

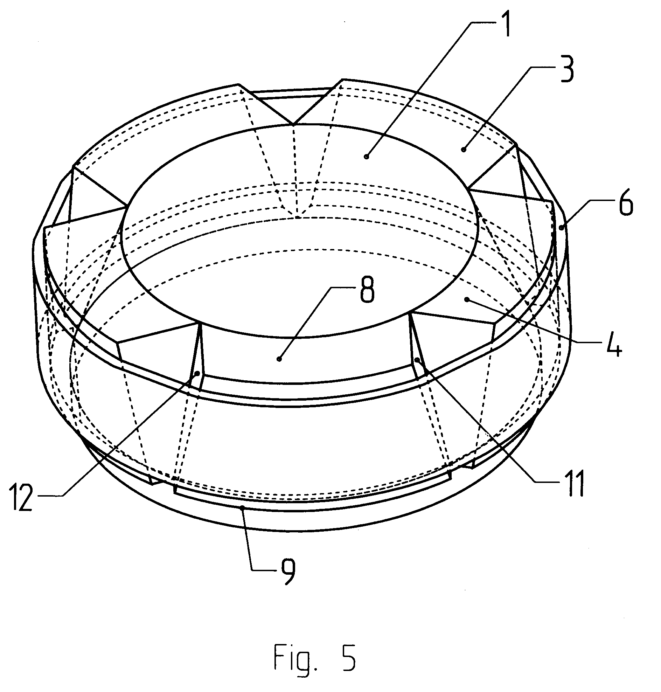

In Fig. 4 ist der Magnet 3 im Schnitt dargestellt. Man erkennt die sich gegenüberliegenden Stirnseiten 8, 9 und die Innenfläche 10, die aufgrund der Krümmung des Magneten an seiner Innenseite an den Seiten des Magneten über die Schnittfläche ragt. Da die Seitenflächen einander zugeneigt sind, d.h. nicht parallel zu einer Achse 7 verlaufen, sind auch die Begrenzungslinien der Fläche 10 zu diesen zwischen den Stirnseite 8 und 9 nicht parallel zueinander.

Diese Ausführungsform hat den Vorteil, daß es durch bekannte Heißpreß- und Warmfließpreßverfahren ohne Nacharbeit endabmessungsgenau möglich ist. Bei Herstellungsverfahren durch Sintern ist es grundsätzlich möglich, die Form des Magneten so zu wählen, daß ein Kreissegment entsteht.

In Fig. 5 ist das magnetische System aus den vorangegangenen Figuren 1 bis 4 perspektivisch dargestellt. Um den Trägerkörper 1 herum sind auf seiner konischen Außenfläche Permanentmagnete 3, 4 angeordnet, die an diesem mittels eines Spannbandes 6, welches unter Vorspannung steht, befestigt sind.

Ein einzelner Permanentmagnet verfügt über zwei Stirnflächen 8, 9 die einander gegenüberliegen. Diese Stirnflächen 8, 9 weisen wegen der konischen Innenfläche unterschiedliche Abmessungen auf. Die Stirnfläche 8 ist radial tiefer aber im Bogenmaß kürzer als die Stirnfläche 8, so daß sich geneigte Seitenflächen 11, 12 ergeben. Die Kanten der Seitenflächen 11, 12 sind jedoch über die Höhe des Trägerkörpers 1 oder des Magneten stets zueinander parallel.

Das Spannband 6 ist zwischen zwei Magneten 3, 4 plastisch verformt, was wegen der Abweichung von der zylindrischen Kontur eine optische Kontrolle zuläßt. Dadurch kann sichergestellt werden, daß die notwendige Vorspannkraft aufgebracht wurde.

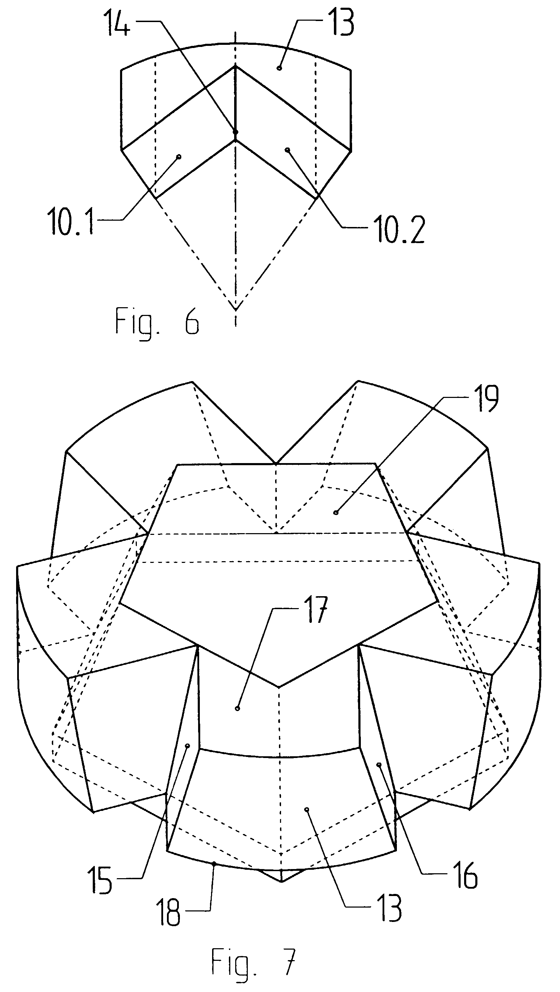

In Fig. 6 ist eine weitere Ausführung eines Permanentmagneten 13 dargestellt. Die Innenfläche 10 besteht aus zwei Bereichen 10.1, 10.2, die an einer Kante 14 zusammenstoßen. Die Innenfläche 10 ist so geformt, daß sie an einen mehrflächigen Pyramidenkörper angelegt werden kann und entlang einer Kante verschoben werden kann. Dabei ist der Permanentmagnet 13 an jeder Stelle in vollflächiger Anlage an dem pyramidenförmigen Trägerkörper. Wie schon in Fig. 2 ausgeführt, sind die Seitenflächen wieder bis zu der verdeckten, gestrichelt dargestellten Kante nach innen eingezogen.

Die perspektivische Darstellung eines magnetischen Systems mit den Magnetformen aus Fig. 6 ist in Fig. 7 gezeigt. Wie schon in Fig. 5 sind die Seitenflächen 15, 16 eines Magneten 13 an den Kanten zu den Stirnflächen 17, 18 sowie über die Höhe des polygonalen Trägerkörpers 19 parallel.

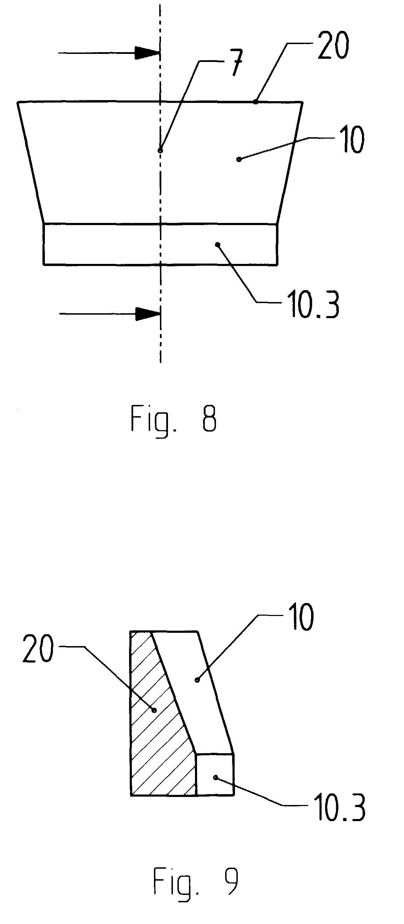

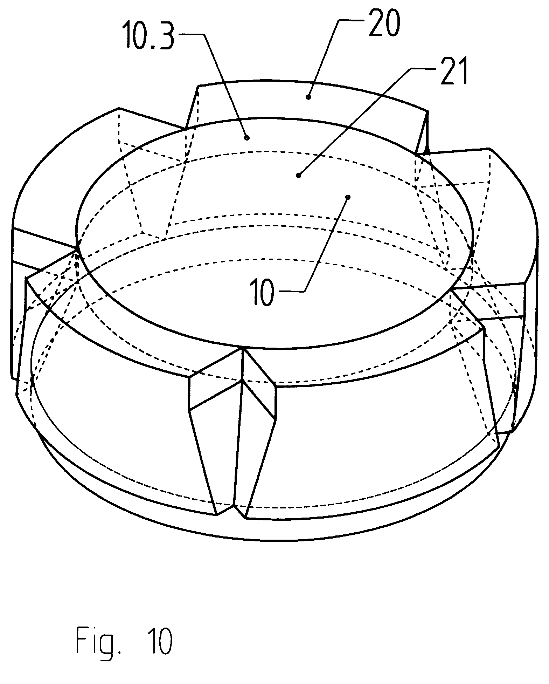

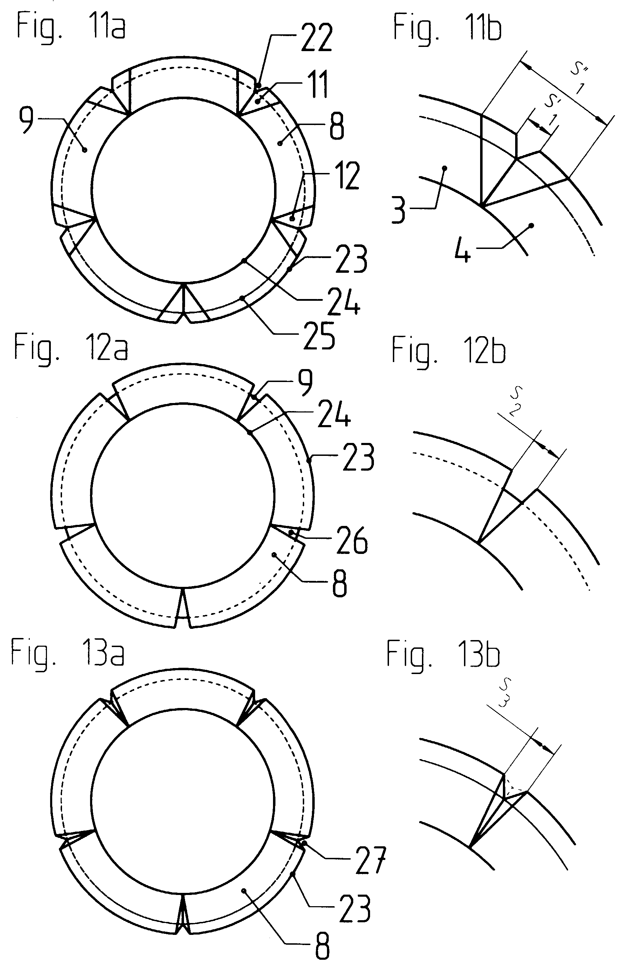

In den Figuren 8, 9 und 10 ist eine weitere Ausgestaltung gezeigt, bei der der konische Bereich der Innenfläche 10 nicht über die gesamte Höhe, d.h. entlang der Achse 7, fortgeführt ist, sondern in dem ein zylindrischer Absatz 10.3 vorliegt. In Fig. 8 ist ein Schnitt durch einen derart gestalteten Permanentmagneten 20 dargestellt. Man erkennt die konische Innenfläche 10 sowie den zylindrischen Bereich 10.3 der Innenfläche. Hier läßt sich die Endlage des Magneten 20 auf den Trägerkörper 21 besser vorgeben.

In den Fig. 11 bis 13 sind verschiedene Geometrien der Seitenflächen 11, 12 und der sich einstellenden Spalte 22 am Außenumfang dargestellt. Dargestellt ist diesmal eine Sicht auf die Stirnseite 8. Der äußere Kreis 23 entspricht dem Außenradius der Außenfläche 5 der Permanentmagnete 3, 4 aus Fig. 1, der innere Kreis 24 ist die Begrenzung der Stirnfläche des Trägerkörpers 1. Der gestrichelte Kreis 25 entspricht dem Radius an der Stirnfläche 9, die in dieser Darstellung nicht sichtbar ist.

Die Fig. 11 spiegelt die Verhältnisse zweier benachbarter trapezförmiger Permanentmagnete 3, 4 nach Fig. 2 bis 5 wider. Ausgehend von einer geringen Spaltbreite s'₁ im Bereich der Stirnfläche 9 weitet sich der Spalt 22 zur Stirnfläche 8 hin zunehmend bis auf eine Spaltbreite s''₁ auf. Theoretisch kommt es hierbei zu einem Kontakt der beiden Permanentmagnete 3, 4 im Bereich der Anlage an die konische Außenfläche des Trägerkörpers 1. Tatsächlich muß bei der Dehnung des Spannbandes ein Abstand zwischen den Magneten entstehen. Wegen der hinterschneidungsfreien Seitenflächen, die jeweils abschnittsweise parallel zueinander sind, sind die Magnete ohne Nacharbeit durch Pressen oder Spritzen in Formen endabmessungsgenau herstellbar.

In Fig. 12 ist die Spalte 26 derart ausgeführt, daß sie vom kleinsten Innenkreis 24 bis zum Außenkreis 23 als Kreissegment mit konstanter Spaltbreite S₂ ausgeschnitten ist, im Gegensatz zu dem im Bereich 1 gezeigten Spalt findet die Berührung der Permanentmagnete nur im Bereich der unteren Stirnfläche 8 statt. Ansonsten berühren sich die Permanentmagneten nicht und man erkennt die Kante der Stirnfläche 9.

Um das Volumen der Permanentmagnete gegenüber den beiden vorhergenannten Varianten in Fig. 11 und 12 noch zu erhöhen, wird in Fig. 12 die Geometrie der Seitenflächen dahingehend abgeändert, daß sich die Permanentmagnete theoretisch entlang der Anlagefläche an dem Trägerkörper über die vollständige Höhe desselben berühren, wobei jedoch die Spaltbreite S₃ des Spaltes 27 am Außenradius 23 konstant bleibt. Hierzu ändert sich die Orientierung der Seitenfläche, so daß eine über die Höhe gesehen tordierte Fläche entsteht. Bei vorgegebener Spaltbreite s₃ und einer Spalttiefe bis zum Trägerkörper 1 wird so ein maximales Magnetvolumen erzielt.

Grundsätzlich ist es auch möglich, den Spalt in Fig. 13 so auszuführen, daß anstelle eines tiefen Spaltes 27 ein möglichst flacher Spalt gewählt wird, wobei im übrigen die Seitenflächen benachbarter Permanentmagnete parallel zueinander sind. Dieser lediglich auf der Außenseite verlaufende Spalt reicht aus, um das Spannband an diesen Stellen bei Erreichen einer gewissen Vorspannkraft zum Fließen und damit zur plastischen Verformung zu bringen. Gegenüber dem Spalt 27 hat dies den Vorteil, daß das Magnetvolumen nochmals vergrößert wurde und daß die Seitenflächen ebene Flächen sind.

Die Permanentmagnete können durch Metallguß oder Sintern hergestellt werden, wobei eine nachträgliche Schleifbearbeitung erforderlich ist, um Abmessungstoleranzen von kleiner 3% einhalten zu können.

Zwischen zwei benachbarten Magneten 3, 4 ist das Spannband über dem Spalt 13 während des Montage plastisch verformt worden, wodurch eine genau definierte Mindestspannkraft sichergestellt wird.

## Patentansprüche

1. Magnetisches System, aufweisend einen oder mehrere an einem Trägerkörper befestigte Permanentmagnete, wobei der oder die Magnete auf der dem Trägerkörper (1) zugewandten Seite eine Innenfläche und der Trägerkörper auf der dem oder den Magneten zugewandten Seite eine entsprechende Außenfläche aufweisen, **dadurch gekennzeichnet**, daß die Außenfläche des Trägerkörpers (1) bzw. die Innenfläche der Magnete zumindest abschnittsweise einen abgewinkelten verlaufenden Bereich aufweisen und daß der oder die Magnete mit einem unter Vorspannung stehenden Spannelement an dem Trägerkörper befestigt sind.

2. Magnetisches System nach Anspruch 1, dadurch gekennzeichnet, daß die den Magneten zugewandten Flächen des Trägerkörpers und die dem Trägerkörper zugewandten Flächen der Magnete zumindest teilweise Teil eines Konus sind.

3. Magnetisches System nach Anspruch 1, dadurch gekennzeichnet, daß der Querschnitt des Trägerkörpers mehreckig ist und daß die einander entsprechenden Flächen des Trägerkörpers und der Permanentmagnete mindestens eine Kante aufweisen.

4. Magnetisches System Nach Anspruch 1 oder 2, dadurch gekennzeichnet, daß das Spannelement ein Spannband ist.

5. Magnetisches System nach einem der Ansprüche 1 bis 3, dadurch gekennzeichnet, daß das Spannelement eine Hülse ist.

6. Magnetisches System nach einem der Ansprüche 1 bis 3, dadurch gekennzeichnet, daß das Spannelement ein Topf ist.

7. Magnetisches System nach einem der Ansprüche 1 bis 6, dadurch gekennzeichnet, daß an den sich einander entsprechenden Flächen der Permanentmagnete und/oder des Trägerkörpers Bereiche erhöhter Rauheit vorhanden sind.

8. Magnetisches System nach einem der Ansprüche 1 bis 7, dadurch gekennzeichnet, daß zwei oder mehr Magnete über den Umfang des Trägerkörpers verteilt angeordnet sind.

9. Magnetisches System nach einem der Ansprüche 1 bis 8, dadurch gekennzeichnet, daß das Spannelement in gedehntem Zustand um den Umfang des mit Permanentmagneten bestückten Trägerkörper angeordnet ist, wobei die Dehnung des Spannelements beim Verschieben des die Permanentmagnete auf ihren äußeren Umfang umfassenden Spannelements und der Permanentmagnete entlang des Trägerkörpers erfolgt und eine Vorspannkraft erzeugt.

10. Magnetisches System nach Anspruch 9, dadurch gekennzeichnet, daß das Spannelement in montiertem Zustand eine plastische Verformung erfahren hat.

11. Magnetisches System nach einem der Ansprüche 1 bis 10, dadurch gekennzeichnet, daß die Magnete unter dem Spannelement die gleiche Polung auf der Stirnseite aufweisen.

12. Magnetisches System nach einem der Ansprüche 1 bis 10, dadurch gekennzeichnet, daß die Magnete unter dem Spannelement eine unterschiedliche Polung auf der Stirnseite aufweisen.

13. Magnetisches System nach einem der Ansprüche 1 bis 12, dadurch gekennzeichnet, daß auf dem Trägerkörper mindestens zwei Systeme nach einem der Ansprüche 1 bis 11 montiert sind.

14. Magnetisches System nach einem der Ansprüche 1 bis 13, dadurch gekennzeichnet, daß die Außenkontur der Magnete eine zylindrische Form aufweist.

15. Magnetisches System nach einem der Ansprüche 1 bis 14, dadurch gekennzeichnet, daß die abgewinkelte Fläche einen Winkel zwischen 0,5 bis 5° aufweist.

16. Magnetisches System nach einem der Ansprüche 1 bis 15, dadurch gekennzeichnet, daß ein Einzelmagnet (3) trapezförmig ausgeführt ist, wobei die Stirnseite (8) mit der größten Dicke des Magneten und somit dem kleinsten Radius die schmale Seite des Trapezes bildet.
